Europäisches Patentamt

European Patent Office

Office européen des brevets

(19)

(11) Veröffentlichungsnummer: **0 269 800 B1**

(12) **EUROPÄISCHE PATENTSCHRIFT**

(45) Veröffentlichungstag der Patentschrift: **13.05.92**

(51) Int. Cl.⁵: **H05B 3/82**, A47J 31/54, H05B 1/02, F24H 1/14

(21) Anmeldenummer: **87113585.1**

(22) Anmeldetag: **17.09.87**

(54) **Durchlauferhitzer für Geräte des persönlichen Bedarfs.**

(30) Priorität: **03.11.86 DE 3637378**

(43) Veröffentlichungstag der Anmeldung:
**08.06.88 Patentblatt 88/23**

(45) Bekanntmachung des Hinweises auf die
Patenterteilung:
**13.05.92 Patentblatt 92/20**

(84) Benannte Vertragsstaaten:
**AT CH DE FR GB LI NL**

(56) Entgegenhaltungen:
**EP-A- 0 170 992**
**DE-A- 2 530 296**

(73) Patentinhaber: **Braun Aktiengesellschaft**
**Rüsselsheimer Strasse 22**
**W-6000 Frankfurt/Main(DE)**

(72) Erfinder: **Wonka, Boris**
**Beethovenstrasse 78**
**W-6078 Neu-Isenburg(DE)**

**Beschreibung**

Die Erfindung betrifft einen elektrischen Durchlauferhitzer für ein Haushaltsgerät nach dem Oberbegriff des Patentanspruchs 1.

Es ist bereits ein elektrischer Durchlauferhitzer für eine Kaffeemaschine bekannt (EP-A1-0 170 992), der einen elektrischen Heizkörper und ein in thermischer Verbindung mit diesem stehendes Wasserdurchlaufrohr aufweist und der mit einem Thermostaten ausgestattet ist. Der Thermostat ist auf einem Montageblech angeordnet, das über einen Steg mit dem Heizkörper fest verbunden ist und schaltet nach Beendigung der Herstellung des Aufgußgetränkes bei einer bestimmten Übertemperatur des Durchlauferhitzers die Spannungsversorgung von dessen Heizkörper aufgrund seiner eigenen Erwärmung zum ersten Mal ab. Sobald der Thermostat aufgrund der dadurch bedingten Abkühlung des Durchlauferhitzers wieder eine bestimmte Temperatur unterschreitet, schaltet er zur Warmhaltung des in einer auf einer ebenfalls vom Durchlauferhitzer beheizten Warmhalteplatte stehenden Warmhaltekanne enthaltenen Kaffees die Spannungsversorgung wieder für eine bestimmte Zeit ein. Dieser Vorgang wiederholt sich während der Warmhaltung des Aufgußgetränks immer wieder.

Soll die bekannte Kaffeemaschine anstelle einer einfachen, nicht wärmeisolierten Glaskanne mit einer wärmeisolierten Warmhaltekanne oder gar mit einer Isolierkanne ausgerüstet werden, wobei die Wärmeverluste des warmzuhaltenden Kaffees jeweils deutlich abnehmen, ist für jede Art von Narmhaltkanne ein anderer Durchlauferhitzer erforderlich, an den auch ein anderer Thermostat angepaßt werden muß, wenn der Kaffee im Warmhaltebetrieb nicht überhitzt werden soll. Somit wird die Herstellung von Kaffeemaschinen dann teurer, wenn sie wahlweise mit einer nicht wärmeisolierten einfachen Glaskanne, einer wärmeisolierten Warmhaltekanne oder gar mit einer Isolierkanne ausgestattet werden sollen.

Der Erfindung liegt daher die Aufgabe zugrunde, den Durchlauferhitzer derart zu verbessern, daß man auch bei Warmhaltekannen mit verschiedenen Wärmeverlusten mit nur einer Ausführungsform von Durchlauferhitzer und Thermostat auskommt.

Diese Aufgabe wird erfindungsgemäß dadurch gelöst, daß zur Aufnahme des Thermostaten mehrere Stege zur Verfügung stehen, an denen jeweils eine Anschlußstelle für dessen Befestigung vorgesehen ist und daß die Stege derart ausgebildet sind, daß der Wärmefluß zu den einzelnen Anschlußstellen aufgrund der unterschiedlichen Wärmeankoppelung zwischen dem betreffenden Steg und dem Durchlauferhitzer unterschiedlich groß ist.

Durch die erfindungsgemäße Ausbildung und Anordnung der Stege läßt sich bei unterschiedlichen Erfordernissen für die Warmhaltung stets der gleiche Thermostat an verschiedene Stege des Durchlauferhitzers montieren, so daß derselbe Durchlauferhitzer zum einen für eine Kaffeemaschine mit lediglich einer einfachen Glaskanne und zum anderen für eine Kaffeemaschine mit einer wärmeisolierten Warmhalte- oder gar Isolierkanne verwendet werden kann. Hierzu wird nach der Erfindung die auch für Glaskannen verwendete Ausführungsform des Thermostaten an einen entsprechend wärmegekoppelten Steg des Durchlauferhitzers montiert. Dadurch lassen sich die Lagerhaltungskosten für den Durchlauferhitzer und für den Thermostaten reduzieren, da man für unterschiedliche Warmhaltungserfordernisse stets mit dem gleichen Durchlauferhitzer und mit einer einzigen Ausführungsform des Thermostaten auskommt. Zur Realisierung ihrer unterschiedlichen Wärmeankoppelung an den Durchlauferhitzer können die Stege zur Aufnahme des Thermostaten unterschiedliche Wärmekapazitäten aufweisen oder unterschiedlich stark dimensioniert werden, wodurch der Wärmefluß zwischen dem Heizkörper und dem Thermostaten entsprechend beeinflußt wird.

Freitragend angeordnete Stege zur Aufnahme des Thermostaten können sich bei einem U-förmig ausgebildeten Durchlauferhitzer nach innen erstrecken. Es ist aber auch möglich, daß zur optimalen Temperaturregelung der Steg bis zur Mittelachse des Durchlauferhitzers reicht, oder daß die Stege an einer anderen Stelle am Durchlauferhitzer befestigt sind, beispielsweise innerhalb oder außerhalb der Krümmung des Wasserdurchlaufrohres. Weiterhin ist es nach der Erfindung denkbar, daß ein Steg die Enden des Durchlauferhitzers miteinander verbindet, an dem zur Aufnahme des Thermostaten zwei Anschlußstellen ausgebildet sind.

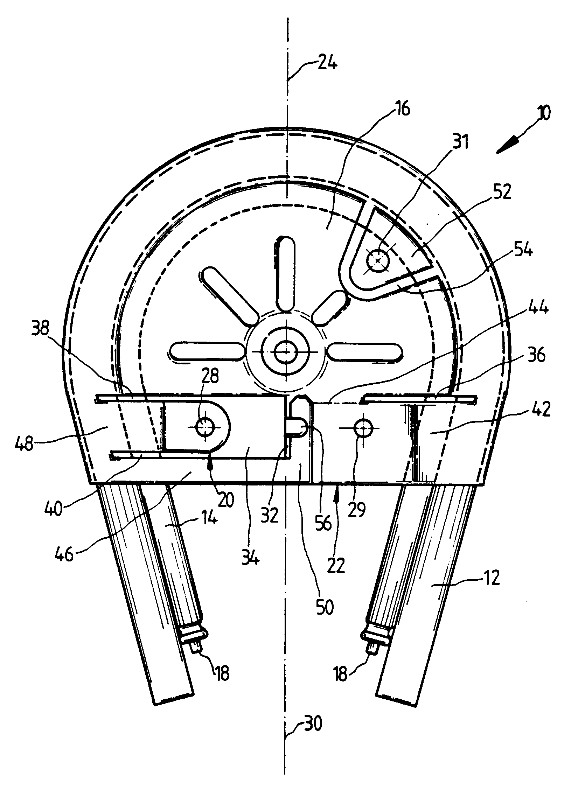

Nachfolgend ist die Erfindung anhand eines in der Zeichnung schematisch dargestellten Ausführungsbeispieles näher erläutert.

In der Zeichnung ist mit 10 ein vorzugsweise aus Aluminium hergestellter Durchlauferhitzer bezeichnet, der aus einem hufeisenförmig ausgebildeten Nasserdurchlaufrohr 12 und einem parallel dazu angeordneten Heizkörper 14 besteht, der beispielsweise an das Wasserdurchlaufrohr 12 angelötet sein kann. Die Enden des Heizkörpers 14 sind über in der Zeichnung nicht dargestellte, elektrische Kabel an ein Stromnetz anschließbar. Das Wasserdurchlaufrohr 12 und der Heizkörper 14 sind ferner auf einer Tragplatte 16 montiert und ebenfalls mit dieser verlötet oder anderweitig befestigt. Die Tragplatte 16 füllt den Zwischenraum zwischen dem bogenförmigen Abschnitt des Heizkörpers 14 aus. In der Zeichnung unterhalb der Tragplatte 16 befinden sich zwei Stege 20 und 22, die aus der Tragplatte 16 teilweise ausgeschnitten sind, die aber auch endseitig mit der Außenseite des Wasserdurchlaufrohres 12 fest verbunden sein können. Wie aus der Zeichnung weiter hervorgeht, sind der rechte und linke Steg 22, 20 mit der Tragplatte 16 verbunden, so daß sie hierdurch eine zusätzliche Abstützung durch die Tragplatte 16 erhalten und sie für einen einwandfreien Wärmefluß vom Durchlauferhitzer zur Temperaturregeleinrichtung Thermostaten sorgen.

Die Tragplatte 16 bildet die Grundplatte des Durchlauferhitzers 10, auf der der Heizkörper 14 und/oder das Wasserrohr 12 befestigt sind. Ist nur der Heizkörper oder das Wasserrohr 12 an der Tragplatte 16 befestigt, so ist das andere Teil entweder am Wasserrohr 12 oder an der Heizung 14 verschweißt. Die Heizung 14 liegt im eingebauten Zustand an der Unterseite der in der Zeichnung nicht dargestellten Warmhalteplatte der Getränkezubereitungsmaschine an, so daß die Tragplatte 16 das Wasserrohr 12 und die Heizung 14 von unten und die Warmhalteplatte diese von oben begrenzt. Die beim Ausschneiden oder Stanzen der Stege 22, 20 aus der Tragplatte 16 gebildeten Schlitze 36, 38, 40 sind in ihrer Länge und Breite so bemessen, daß durch sie nur ein vorgegebener Wärmeübergang an den Anbindungsstellen 42, 44, 46 und 48 zu den Anschlußstellen 28 möglich ist.

Die Tragplatte 16 umgreift nur teilweise das Wasserrohr 12. Der Steg 20 erstreckt sich über die ganze Breite des Durchlauferhitzers 10, er ist aber in Höhe der Mittelachse 30 durch die Seitenwand 32 abgesetzt; der hierdurch gebildete Freiraum 34 dient als Raum für den Steg 20. An die Seitenwand 32 schließt sich in der Zeichnung nach rechts eine in Längsrichtung zur Mittelachse 30 am Steg 22 verlaufende Sicke 50 an, die zur Aufnahme einer nicht dargestellten Schmelzsicherung dient. Der Blechlappen 56 hält die Schmelzsicherung in der Sicke 50. An den Stegen 20, 22 sind die Anschlußstellen 28 bzw. 29 in Form von Bohrungen gebildet, die zur Befestigung der in der Zeichnung nicht dargestellten Thermostatregler dienen.

Auf der Tragplatte 16 ist im bogenförmigen Abschnitt ein weiterer Steg 52 ausgestanzt, der im Bereich des Wasserrohrs 12 an die Tragplatte 16 angebunden ist und der vom Schlitz 54 umgeben ist. Auch er weist zur Aufnahme eines Thermostaten eine Anschlußbohrung 31 auf.

Solange das Wasserdurchlaufrohr 12 mit Wasser beschickt wird, kann die Temperaturregeleinrichtung Thermostat keine höhere Temperatur erreichen, als die des Wassers, die etwa bei 100°C liegt. Solange also Wasser über das Wasserdurchlaufrohr fließt, befindet sich der Regler in Einschaltstellung. Erst wenn beispielsweise die Kaffeezubereitung abgeschlossen ist und kein Wasser mehr durch das Wasserdurchlaufrohr fließt, erhöht sich der Wärmefluß vom Heizkörper 14 und dem Wasserdurchlaufrohr 12 über Stege 20, 22 oder 52 zur Temperaturregeleinrichtung, so daß diese nach einem bestimmten Erhitzungsgrad den Heizkörper abschaltet und nach Abkühlung auf eine vorgegebene Temperatur diesen wieder einschaltet.

Der kürzere Steg 20 dient beispielsweise zur Aufnahme einer Temperaturregeleinrichtung, bei der eine geringere Warmhaltungstemperatur gewünscht, wie dies beispielsweise bei Isolierkannen erforderlich ist. Der Steg 22 dagegen dient zur Aufnahme der Temperaturregeleinrichtung, wenn eine höhere Warmhaltungstemperatur gewünscht wird bzw. mehr Wärme zugeführt werden muß, um die Energieverluste der Kanne auszugleichen. Hierbei ist auch für die Regelung von Bedeutung, ob der Steg 20 bzw. 22 bzw. 52 näher am Wassereinlauf oder am Wasserauslauf des Wasserrohres 12 angeordnet ist, da am Auslauf das Wasser eine höhere Temperatur als im Wassereinlauf aufweist.

Der beschriebene Durchlauferhitzer 10 ist also für unterschiedliche Warmhaltungserfordernisse ausgelegt, wobei die anderen Parameter, wie Heizleistung, Größe des Durchlauferhitzers 10, etc., beibehalten werden können. Die unterschiedliche Schalttemperatur für die Temperaturregeleinrichtung kann also durch die unterschiedliche Positionierung der Temperaturregeleinrichtung auf den verschiedenen Stegen 20, 22 bzw. 52 auf einfache Weise beeinflußt werden. Hierdurch ist es möglich, mit zwei gleichen Bausteinen (Regler und Durchlauferhitzer) unterschiedliche Bedingungen zu schaffen, wobei wahlweise die Temperaturregeleinrichtung entweder auf einem kurzen 20 bzw. 52 oder auf einem längeren Steg 22 des Durchlauferhitzers 10 montiert wird. Hierdurch lassen sich die Lagerhaltungskosten für die Temperaturregelungsvorrichtungen und den Durchlauferhitzer 10 reduzieren, da für unterschiedliche Durchlauferhitzer die gleichen Bauteile verwendet werden können.

Die in der Zeichnung dargestellten, diametral gegenüber angeordneten Stege 20 und 22 lassen sich auch an anderer Stelle an dem Wasserdurchlaufrohr 12 bzw. der Heizung 14 montieren. So ist es beispielsweise möglich, den einen Steg 20 im Halbkreis an der Innenseite des Wasserdurchlaufrohres 12 vorzusehen, wie dies beispielsweise der Steg 52 zeigt. Ebenso ist es auch möglich, einen Steg außerhalb, d.h., an der Außenseite des Wasserdurchlaufrohres 12 zu montieren.

Es ist aber nicht immer unbedingt erforderlich, eine Tragplatte 16 zu verwenden. Wird keine Tragplatte 16 verwendet, so können die Stege 20, 22, 52 auch am Wasserrohr 12 oder an der Heizung 14 befestigt sind. Es ist aber auch möglich, den Steg durch zwei Blechlappen herzustellen, von denen der eine vom Wasserrohr 12 und der andere von der Heizung 14 ausgeht und beide freien Enden zusammengefügt werden. Hierdurch kann die Biegesteifigkeit sowie die Wärmeaufnahme bzw. der Wärmefluß des Steges verbessert werden.

**Patentansprüche**

1. Elektrischer Durchlauferhitzer (10) für ein Haushaltsgerät zur Herstellung von Aufgußgetränken, wie Kaffee oder Tee, mit einem Heizkörper (14), einem an diesen thermisch angekoppelten Wasserdurchlaufrohr (12), einer ebenfalls vom Durchlauferhitzer beheizten Warmhalteplatte, die zum Abstellen und zum Warmhalten einer mit dem Aufgußgetränk füllbaren Warmhaltekanne dient, und mit einem zur Regelung der Temparatur des Durchlauferhitzers vorgesehenen Thermostaten, dessen Wärmeankoppelung an den Durchlauferhitzer über einen Steg erfolgt, wobei der Thermostat während der Herstellung des Aufgußgetränks die elektrische Verbindung des Heizkörpers des Durchlauferhitzers mit seiner Spannungsversorgung durchgehend aufrecht erhält, diese aber während dessen durch die Warmhalteplatte erfolgende Warmhaltung immer wieder unterbricht,
**dadurch gekennzeichnet,**
daß der Durchlauferhitzer (10) zu seiner Anpassung an verschieden große Wärmeverluste aufweisende Warmhaltekannen mehrere Stege (20, 22, 52) aufweist, die jeweils eine Anschlußstelle (28, 29, 31) für die thermische und mechanische Verbindung zwischen Steg und Thermostaten aufweisen und daß die Wärmeankoppelung der Stege (20, 22, 52) an den Durchlauferhitzer (10) unterschiedlich groß ausgebildet ist.

2. Durchlauferhitzer nach Anspruch 1,
**dadurch gekennzeichnet,**
daß die einzelnen Stege (20, 22, eine unterschiedliche Wärmekapazität aufweisen.

3. Durchlauferhitzer nach Anspruch 2,
**dadurch gekennzeichnet,**
daß die Stege (20, 22, 52)) unterschiedlich stark dimensioniert sind.

4. Durchlauferhitzer nach Anspruch 1,
**dadurch gekennzeichnet,**
daß einzelne Stege (20, freitragend am Wasserdurchlaufrohr (12) und/oder an dem Heizkörper (14) angeschlossen sind, daß das Wasserdurchlaufrohr (12) und der Heizkörper (14) u-förmig ausgebildet sind und daß sich die Stege (20, 52) von der Anschlußstelle (28,31) zu dem vom u-förmigen Wasserdurchlaufrohr (12) gebildeten Innenraum erstrecken.

5. Durchlauferhitzer nach Anspruch 4,
**dadurch gekennzeichnet,**
daß eine Anschlußstelle (31) zum Anschluß des Thermostaten im inneren Bereich der Krümmung des Heizkörpers (14) bzw. des Wasserdurchlaufrohres (12) und die andere (28 bzw. 29) außerhalb dieses Bereiches vorgesehen ist.

6. Durchlauferhitzer nach Anspruch 1,
**dadurch gekennzeichnet,**
daß die Abstände zwischen den verschiedenen Anschlußstellen (28, 29, 31) und dem Heizkörper (14) bzw. dem Wasserdurchlaufrohr (12) unterschiedlich groß sind.

**Claims**

1. An electrical continuous flow heater (10) for a domestic appliance for making infusion beverages such as coffee or tea, comprising a heater element (14), a water supply pipe (12) being thermally coupled thereto, a warming plate also heated by the continuous flow heater and serving to place thereon and keep hot a keep-warm carafe to be filled with the infusion beverage, and comprising a thermostat intended to control the temperature of the continuous flow heater, the heat transmission of which to the continuous flow heater takes place via a rib, with the thermostat during making the infusion beverage constantly maintaining the electrical connection between the heater element of the continuous flow heater and said's power supply, yet again and again interrupting it when the heater element is kept warm by the warming plate,
**characterized** in that in order to adapt to keep-warm carafes having differently great heat losses the continuous flow heater (10) is furnished with a plurality of ribs (20, 22, 52) which have each one connector plug (28, 29, 31) for the thermal and mechanic connection between rib and thermostats, and in that the heat transmission of the ribs (20, 22, 52) to the continuous flow heater (10) is designed to be of different magnitude.

2. A continuous flow heater as claimed in claim 1, **characterized** in that the individual ribs (20, 22, 52) have a different heat capacity.

3. A continuous flow heater as claimed in claim 2, **characterized** in that the ribs (20, 22, 52) are dimensioned to be differently strong.

4. A continuous flow heater as claimed in claim 1, **characterized** in that individual ribs (20, 52) are connected to the water supply pipe (12) and/or to the heater element (14) in a self-supporting manner, in that the water supply pipe (12) and the heater element (14) are of U-shaped design, and in that the ribs (20, 52) extend from the connector plug (28, 31) to the inner space formed by the U-shaped water supply pipe (12).

5. A continuous flow heater as claimed in claim 4, **characterized** in that a connector plug (31) is provided for connecting the thermostat in the inner area of the curvature of the heater element (14) or the water supply pipe (12), respectively, while the other one (28 and 29, respectively) is provided outside of this area.

6. A continuous flow heater as claimed in claim 1, **characterized** in that the distances between the different connector plugs (28, 29, 31) and the heater element (14) or the water supply pipe (12), respectively, are of different size.

## Revendications

1. Chauffe-eau électrique instantané (10) pour un appareil ménager destiné à la fabrication de boissons à base d'eau chaude, telles que du café ou du thé, comportant un corps de chauffe (14) et, couplé thermiquement à celui-ci, un tube de circulation d'eau (12), une plaque chauffante également chauffée par le chauffe-eau instantané et servant à poser et à maintenir au chaud un pot de maintien au chaud susceptible d'être rempli par la boisson à base d'eau chaude, ainsi qu'un thermostat qui est prévu pour la régulation de la température du chauffe-eau instantané, et dont le couplage thermique au chauffe-eau instantané se fait par l'intermédiaire d'une nervure, le thermostat maintenant établie en continu au cours de la fabrication de la boisson à base d'eau chaude, la liaison du corps de chauffe du chauffe-eau instantané avec sa source de tension électrique, mais interrompant celle-ci de façon renouvelée pendant le maintien au chaud de la boisson par la plaque chauffante,
caractérisé en ce que pour son adaptation à des pots de maintien au chaud présentant différentes grandeurs de pertes calorifiques, le chauffe-eau instantané (10) comporte plusieurs nervures (20, 22, 52) qui comportent chacune un point de raccordement (28, 29, 31) pour la liaison thermique et mécanique entre nervure et thermostat, et en ce que le couplage thermique des nervures (20, 22, 52) au chauffe-eau instantané (10) est réalisé selon des grandeurs différentes.

2. Chauffe-eau instantané selon la revendication 1, caractérisé en ce que les nervures individuelles (20, 22, 52) présentent une capacité calorifique différente.

3. Chauffe-eau instantané selon la revendication 2, caractérisé en ce que les nervures (20, 22, 52) présentent des dimensions de grandeurs différentes.

4. Chauffe-eau instantané selon la revendication 1, caractérisé en ce que des nervures individuelles (20, 52) sont raccordées en porte-à-faux au tube de circulation d'eau (12) et/ou au corps de chauffe (14), en ce que le tube de circulation d'eau (12) et le corps de chauffe (14) sont de configuration en forme de "u", et en ce que les nervures (20, 22, 52) s'étendent du point de raccordement (28, 31) vers l'espace intérieur formé par le tube de circulation d'eau (12) en forme de "u".

5. Chauffe-eau instantané selon la revendication 4, caractérisé en ce qu'un point de raccordement (31) pour le raccordement du thermostat est prévu dans la zone intérieure de la courbure du corps de chauffe (14) ou du tube de circulation d'eau (12), et l'autre point de raccordement (28 ou 29) est prévu en-dehors de cette zone.

6. Chauffe-eau instantané selon la revendication 1, caractérisé en ce que les distances entres les différents points de raccordement (28, 29, 31) et le corps de chauffe (14) et le tube de circulation d'eau (12), sont de grandeurs différentes.